# EUROPEAN PATENT APPLICATION

(11) **EP 4 683 003 A1**
(43) Date of publication of application: **21.01.2026**
(21) Application number: 25185733.0
(22) Date of filing: 27.06.2025
(51) Int. Cl.: H01M 4/70, H01M 10/0583, H01M 10/052, H01M 50/538

(54) **ELECTRODE ASSEMBLY AND METHOD FOR MANUFACTURING THE SAME**

(30) Priority: 19.07.2024 KR 20240095945
(71) Applicant: SAMSUNG SDI CO., LTD., Yongin-si, Gyeonggi-do 17084 (KR)
(72) Inventor: PARK, Yong-Kyun, 17084 Yongin-si, Gyeonggi-do (KR); JANG, Hyeyeon, 17084 Yongin-Si, Gyeonggi-do (KR); HA, Eunhyeon, 17084 Yongin-Si, Gyeonggi-do (KR); HAN, Da-Un, 17084 Yongin-si, Gyeonggi-do (KR); YEOM, Jingu, 17084 Yongin-Si, Gyeonggi-do (KR); KIM, Yuhyun, 17084 Yongin-Si, Gyeonggi-do (KR); NAM, Sanghee, 17084 Yongin-Si, Gyeonggi-do (KR); CHOI, Mingu, 17084 Yongin-Si, Gyeonggi-do (KR)
(74) Representative: Gulde & Partner

(57) **Abstract**

An electrode assembly includes positive and negative electrode plates, each electrode plate including a respective positive or negative electrode mixture portion on which a respective positive or negative electrode active material is applied to an electrode substrate and a first uncoated portion on which an electrode active material is not applied to the respective positive or negative electrode substrate, and a separator between each of the positive electrode plates and each of the negative electrode plates, the positive and negative electrode mixtures each have two portions, separated by uncoated sections, the lengths of the bent uncoated portions match the lengths of their respective electrode substrates, and bent uncoated portions match the lengths of their respective electrode substrates.

## Description

### BACKGROUND

### 1. Field

Embodiments relate to an electrode assembly and method for manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments include an electrode assembly, including a plurality of positive electrode plates, each of the plurality of positive electrode plates comprising a positive electrode mixture portion on which a positive electrode active material is applied to a positive electrode substrate and a first uncoated portion on which a positive electrode active material is not applied to the positive electrode substrate, a plurality of negative electrode plates, each of the plurality of negative electrode plates comprising a negative electrode mixture portion on which a negative electrode active material is applied to a negative electrode substrate and a second uncoated portion on which a negative electrode active material is not applied to the negative electrode substrate, and a separator between each of the positive electrode plates and each of the negative electrode plates, wherein the positive electrode mixture portion comprises a first positive electrode mixture portion and a second positive electrode mixture portion, the negative electrode mixture portion comprises a first negative electrode mixture portion and a second negative electrode mixture portion, the first uncoated portion is between the first positive electrode mixture portion and the second positive electrode mixture portion, the second uncoated portion is between the first negative electrode mixture portion and the second negative electrode mixture portion, a length of a bent portion of the first uncoated portion corresponds to a length of the positive electrode substrate, and a length of a bent portion of the second uncoated portion corresponds to a length of the negative electrode substrate.

The electrode assembly may further comprise a first connecting member connecting the plurality of positive electrode plates to each other and a second connecting member connecting the plurality of negative electrode plates to each other.

The first uncoated portion may further include a first bending line formed at a position closer to the first positive electrode mixture portion than the second positive electrode mixture portion, and a second bending line at a position closer to the second positive electrode mixture portion than the first positive electrode mixture portion, the second bending line being parallel to the first bending line, wherein the bent portion of the first uncoated portion is based on the first bending line and the second bending line.

One end of the first connecting member may be connected to the bent portion of each of the plurality of positive electrode plates and another end opposite the one end of the first connecting member may be connected to a lead tab.

A width of the first uncoated portion may be determined based on at least a portion of a thickness of each of the plurality of positive electrode plates, a thickness of each of the plurality of negative electrode plates, a thickness of the separator, or a width of the bent portion.

The first uncoated portion may include a first bending line at a position closer to the first positive electrode mixture portion than the second positive electrode mixture portion, a second bending line at a position closer to the second positive electrode mixture portion than the first positive electrode mixture portion, and a third bending line between the first bending line and the second bending line and parallel to each of the first bending line and the second bending line, wherein the bent portion of the first uncoated portion may include a first bending portion based on the first bending line and the third bending line, and a second bending portion based on the second bending line and the third bending line.

One end of the first connecting member may be connected to at least a portion of the first bending portion or at least a portion of the second bending portion, and another end of the first connecting member opposite the one end may be connected to a lead tab.

A width of the first uncoated portion may be determined based on at least a portion of a thickness of each of the plurality of positive electrode plates, a thickness of each of the plurality of negative electrode plates, a thickness of the separator, a width of the first bending portion, or a width of the second bending portion.

A distance between the first bending line and the third bending line may be determined based on at least one of a thickness of each of the plurality of positive electrode plates or a thickness of each of the plurality of negative electrode plates.

The first bent portion and the second bent portion may be exposed to an outside of the positive electrode mixture portion.

A width of the first uncoated portion may be greater than a width of the second uncoated portion.

One of the first negative electrode mixture portion and the second negative electrode mixture portion may be between the first positive electrode mixture portion and the second positive electrode mixture portion, and one of the first positive electrode mixture portion and the second positive electrode mixture portion may be between the first negative electrode mixture portion and the second negative electrode mixture portion.

The separator may cover an upper surface of any one electrode plate arranged at an uppermost end among the plurality of positive electrode plates or the plurality of negative electrode plates, and the separator may cover a lower surface of any one electrode plate arranged at a lowermost end among the plurality of positive electrode plates or the plurality of negative electrode plates.

The any one electrode plate arranged at the uppermost end may be different from the any one electrode plate arranged at the lowermost end.

Embodiments include a method for manufacturing an electrode assembly, the method including preparing a plurality of positive electrode plates, each of the plurality of positive electrode plates comprising a positive electrode mixture portion on which a positive electrode active material is applied to a positive electrode substrate and a first uncoated portion on which a positive electrode active material is not applied to the positive electrode substrate, preparing a plurality of negative electrode plates, each of the plurality of negative electrode plates comprising a negative electrode mixture portion on which a negative electrode active material is applied to a negative electrode substrate and a second uncoated portion on which a negative electrode active material is not applied to the negative electrode substrate, and stacking the plurality of positive electrode plates and the plurality of negative electrode plates while arranging a separator between the plurality of positive electrode plates and the plurality of negative electrode plates, wherein the positive electrode mixture portion comprises a first positive electrode mixture portion and a second positive electrode mixture portion, the negative electrode mixture portion comprises a first negative electrode mixture portion and a second negative electrode mixture portion, the first uncoated portion is between the first positive electrode mixture portion and the second positive electrode mixture portion, the second uncoated portion is between the first negative electrode mixture portion and the second negative electrode mixture portion, a length of a bent portion of the first uncoated portion corresponds to a length of the positive electrode substrate, and a length of a bent portion of the second uncoated portion corresponds to a length of the negative electrode substrate.

The stacking may include arranging the first negative electrode mixture portion or the second negative electrode mixture portion between the first positive electrode mixture portion and the second positive electrode mixture portion, and arranging the first positive electrode mixture portion or the second positive electrode mixture portion between the first negative electrode mixture portion and the second negative electrode mixture portion.

The method may further include connecting a first connecting member to each of the plurality of positive electrode plates, and connecting a second connecting member to each of the plurality of negative electrode plates.

The first uncoated portion may include a first bending line at a position closer to the first positive electrode mixture portion than the second positive electrode mixture portion, and a second bending line at a position closer to the second positive electrode mixture portion than the first positive electrode mixture portion, the second bending line being parallel to the first bending line, wherein the bent portion of the first uncoated portion is based on the first bending line and the second bending line.

One end of the first connecting member may be connected to the bent portion of each of the plurality of positive electrode plates and another end of the first connecting member opposite the one end may be connected to a lead tab.

A width of the first uncoated portion may be determined based on at least a portion of a thickness of the plurality of positive electrode plates, a thickness of the plurality of negative electrode plates, a thickness of the separator, or a width of the bent portion.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a plan view showing an example of an electrode plate according to an embodiment of the present disclosure.
FIG. 2 is a cross-sectional view showing an example of a positive electrode plate according to an embodiment of the present disclosure.
FIG. 3 illustrates an example of an electrode plate according to an embodiment of the present disclosure.
FIG. 4 illustrates an example of an electrode assembly according to an embodiment of the present disclosure.
FIG. 5 illustrates an example in which a plurality of positive electrode plates of an electrode assembly according to an embodiment of the present disclosure are connected to a first lead tab.
FIG. 6 illustrates an example of an electrode plate according to an embodiment of the present disclosure.
FIG. 7 illustrates an example of an electrode assembly according to an embodiment of the present disclosure.
FIG. 8 illustrates an example in which a plurality of positive electrode plates of an electrode assembly according to an embodiment of the present disclosure are connected to a first lead tab.
FIG. 9 is a flowchart showing an example of a method for manufacturing an electrode assembly according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

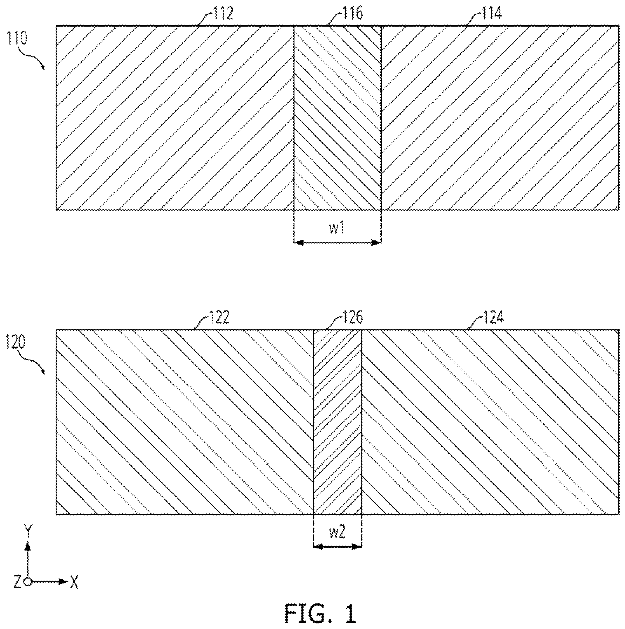

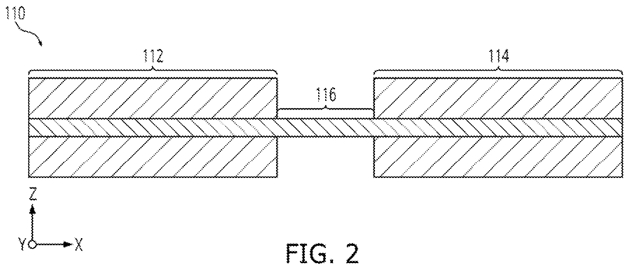

FIG. 1 illustrates a plan view showing an example of an electrode plate according to an embodiment of the present disclosure, and FIG. 2 is a cross-sectional view showing an example of a positive electrode plate 110 according to an embodiment of the present disclosure. In an embodiment, the positive electrode plate 110 may include a first positive electrode mixture portion 112 and a second positive electrode mixture portion 114 on which a positive electrode active material is applied to a positive electrode substrate, and a first uncoated portion 116 on which a positive electrode active material is not applied to the positive electrode substrate. Mixture portions may be formed on one or both sides (e.g., see FIG. 2) of the positive electrode plate 110.

Similarly, a negative electrode plate 120 may include a first negative electrode mixture portion 122 and a second negative electrode mixture portion 124 on which a negative electrode active material is applied to a negative electrode substrate, and a second uncoated portion 126 on which a negative electrode active material is not applied to the negative electrode substrate. Mixture portions may be formed on one or both sides of the negative electrode plate 120.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a rechargeable lithium battery may include a current collector and a positive electrode active material layer on the current collector. The positive electrode active material layer may include a positive electrode active material and may further include a binder and/or a conductive material(e.g., an electrically conductive material).

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

Al may be used as the current collector, but is not limited thereto.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof).

The silicon-carbon composite may be a composite of silicon and amorphous carbon. According to an embodiment, the silicon-carbon composite may be in a form of silicon particles and amorphous carbon coated on the surface of the silicon particles.

The silicon-carbon composite may further include crystalline carbon. For example, the silicon-carbon composite may include a core including crystalline carbon and silicon particles and an amorphous carbon coating layer on a surface of the core.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

In an embodiment, the first uncoated portion 116 may be arranged between the first positive electrode mixture portion 112 and the second positive electrode mixture portion 114. Similarly, the second uncoated portion 126 may be arranged between the first negative electrode mixture portion 122 and the second negative electrode mixture portion 124. In addition, a width W1 of the first uncoated portion 116 may be larger than a width W2 of the second uncoated portion 126.

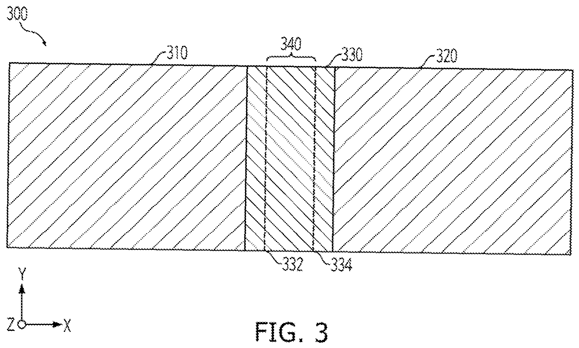

FIG. 3 illustrates an example of an electrode plate 300 according to an embodiment of the present disclosure. In an embodiment, the electrode plate (the positive electrode plate or the negative electrode plate) 300 may include a first mixture portion 310 and a second mixture portion 320 on which an active material is applied to a substrate, and an uncoated portion 330 on which an active material is not applied to the substrate. The uncoated portion 330 may be arranged between the first mixture portion 310 and the second mixture portion 320.

In an embodiment, the uncoated portion 330 may include a bent portion 340. Specifically, the uncoated portion 330 may include a first bending line 332 formed at a position closer to the first mixture portion 310 than the second mixture portion 320. In addition, the uncoated portion 330 may include a second bending line 334 formed at a position closer to the second mixture portion 320 than the first mixture portion 310. The second bending line 334 may be parallel to the first bending line 332. The bending portion 340 may be formed based on the first bending line 332 and the second bending line 334.

In an embodiment, the length of the bent portion 340 of the uncoated portion 330 may correspond to the length of the substrate. The length may represent the vertical length perpendicular to the width (as oriented in FIGS. 1 and 3). For example, in a case where the electrode plate 300 is a positive electrode plate, the length of the bent portion 340 may be the same as the length of the positive electrode substrate. As another example, in a case where the electrode plate 300 is a negative electrode plate, the length of the bent portion 340 may be the same as the length of the negative electrode substrate.

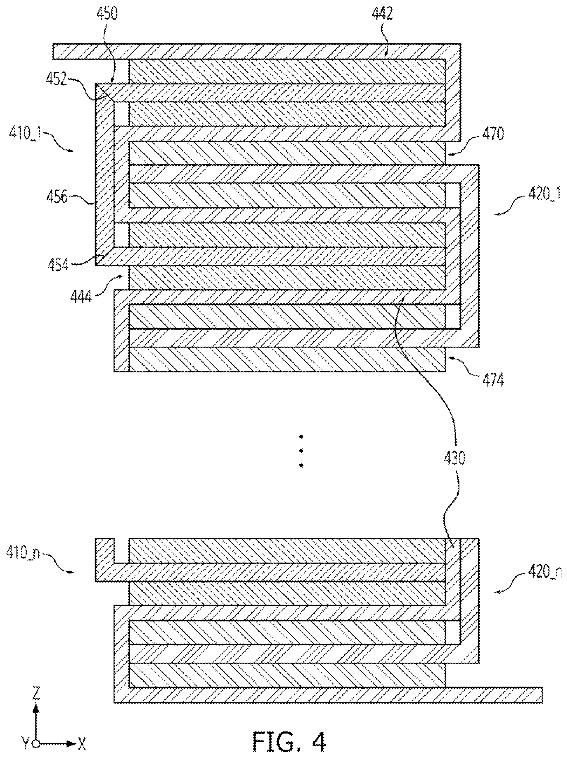

FIG. 4 illustrates an example of an electrode assembly according to an embodiment of the present disclosure. In an embodiment, the electrode assembly may include a plurality of positive electrode plates 410_1 to 410_n, a plurality of negative electrode plates 420_1 to 420_n, and a separator 430. Each of the positive electrode plates 410_1 to 410_n and the negative electrode plates 420_1 to 420_n may be included in the electrode plate 300 described above with reference to FIG. 3.

In an embodiment, as described above with reference to FIG. 3, the electrode plate (the positive electrode plate or the negative electrode plate) may include a first mixture portion and a second mixture portion on which an active material is applied to a substrate, and an uncoated portion on which an active material is not applied to the substrate. The uncoated portion may be arranged between the first mixture portion and the second mixture portion. Additionally, the uncoated portion may include a bent portion.

For example, an uncoated portion 450 of the first positive electrode plate 410_1 may include a first bending line 452 formed at a position closer to a first positive electrode mixture portion 442 than a second positive electrode mixture portion 444 and a second bending line 454 formed at a position closer to the second positive electrode mixture portion 444 than the first positive electrode mixture portion 442. The first bending line 452 and the second bending line 454 may be parallel to each other (e.g., in FIG. 3 prior to bending, resulting in FIG. 4). Additionally, the uncoated portion 450 of the first positive electrode plate 410_1 may further include a bending portion 456 formed based on the first bending line 452 and the second bending line 454. Each of the positive electrode plates (e.g., 410_2 to 410_n) other than the first positive electrode plate 410_1 and the negative electrode plates 420_1 to 420_n may also be similar to the first positive electrode plate 410_1.

In an embodiment, the width (e.g., the uncoated portion 330 in the X-axis direction) of the uncoated portion may be determined based on at least a portion of the thickness of the positive electrode plate (e.g., the first positive electrode mixture portion 112 in the Z-axis direction), the thickness of the negative electrode plate (e.g., the first negative electrode mixture portion 122 in the Z-axis direction), the thickness of the separator (e.g., separator 430 in the Z-axis direction), or the width of the bent portion (e.g., the bent portion 340 in the X-axis direction). The thickness of the positive electrode plate and the thickness of the negative electrode plate may be thicknesses that take into account the thickness expansion rate of the positive electrode plate and the thickness expansion rate of the negative electrode plate. For example, the uncoated portion 450 of the first positive electrode plate 410_1 may be determined based on at least a portion of the thickness of the first positive electrode plate 410_1, the thickness of the first negative electrode plate 420_1, the thickness of the separator 430, or the width of the bent portion 456. Additionally, the width of the bent portion 456 may be 2 mm or more, but the width could be different.

In an embodiment, the positive electrode plates 410_1 to 410_n and the negative electrode plates 420_1 to 420_n may be arranged to cross each other. Specifically, the first negative electrode mixture portion or the second negative electrode mixture portion of the negative electrode plate may be arranged between the first positive electrode mixture portion and the second positive electrode mixture portion of the positive electrode plate, and the first positive electrode mixture portion or the second positive electrode mixture portion may be arranged between the first negative electrode mixture portion and the second negative electrode mixture portion. For example, a first negative electrode mixture portion 470 of the first negative electrode plate 420_1 may be arranged between the first positive electrode mixture portion 442 and the second positive electrode mixture portion 444 of the first positive electrode plate 410_1. In addition, the second positive electrode mixture portion 444 of the first positive electrode plate 410_1 may be arranged between the first negative electrode mixture portion 470 and the second negative electrode mixture portion 474 of the first negative electrode plate 420_1.

In an embodiment, the separator 430 may be arranged between each of the positive electrode plates 410_1 to 410_n and each of the negative electrode plates 420_1 to 420_n. In addition, the separator 430 may cover the upper surface of any one electrode plate arranged at the uppermost end among the positive electrode plates 410_1 to 410_n or the negative electrode plates 420_1 to 420_n and may cover the lower surface of any one electrode plate arranged at the lowermost end among the positive electrode plates 410_1 to 410_n or the negative electrode plates 420_1 to 420_n. The polarity of the electrode plate arranged at the uppermost end may be different from the polarity of the electrode plate arranged at the lowermost end. For example, in a case where the positive electrode plate is arranged at the uppermost end of the electrode assembly, the negative electrode plate may be arranged at the lowermost end of the electrode assembly. In contrast, in a case where the negative electrode plate is arranged at the uppermost end of the electrode assembly, the positive electrode plate may be arranged at the lowermost end of the electrode assembly. Referring to FIG. 4, the separator 430 may cover the upper surface of the first positive electrode plate 410_1 stacked at the uppermost end of the electrode assembly and may cover the lower surface of the n-th negative electrode plate 420_n stacked at the lowermost end of the electrode assembly.

As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof but is not limited thereto.

The organic material and the inorganic material may be mixed in one coating layer or may be in the form of a coating layer containing an organic material and a coating layer containing an inorganic material that are laminated on each other.

With this structure, the electrode assembly may be manufactured without forming electrode tabs through notching in the electrode plate. In addition, it is possible to prevent the occurrence of burrs and active material detachment due to notching. Accordingly, the quality and safety of the electrode assembly and the secondary battery including the same may be improved.

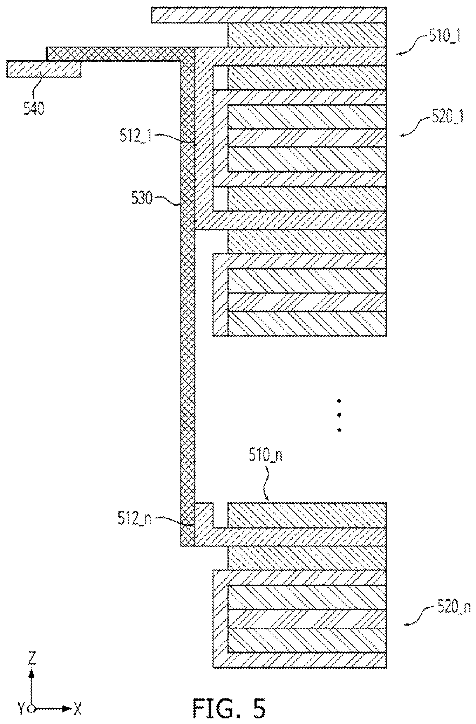

FIG. 5 illustrates an example in which a plurality of positive electrode plates 510_1 to 510_n of an electrode assembly according to an embodiment of the present disclosure are connected to a first lead tab 540. In an embodiment, the electrode assembly may include a first connecting member 530 that connects each of the positive electrode plates 510_1 to 510_n to the first lead tab 540. Specifically, one end of the first connecting member 530 may be connected to bent portions 512_1 to 512_n of the positive electrode plates 510_1 to 510_n. Additionally, the other end of the first connecting member 530 may be connected to the first lead tab 540. In this case, one end of the first connecting member 530 may be formed in the height direction (as oriented in FIG. 5) in which the electrode assembly is stacked.

In FIG. 5, for convenience of explanation, only the first connecting member 530 that connects each of the positive electrode plates 510_1 to 510_n to the first lead tab 540 is illustrated, but other ways to make the connection may be used. For example, the electrode assembly may include a second connecting member (not shown) that connects each of a plurality of negative electrode plates 520_1 to 520_n to a second lead tab (not shown). Similar to the first connecting member 510, the second connecting member may connect the bent portion of each of the negative electrode plates 520_1 to 520_n to the second lead tab.

With this structure, the energy density of the electrode assembly may be improved by connecting the bent portions of the electrode plates using the connecting members. Accordingly and advantageously, the performance of the secondary battery may be improved.

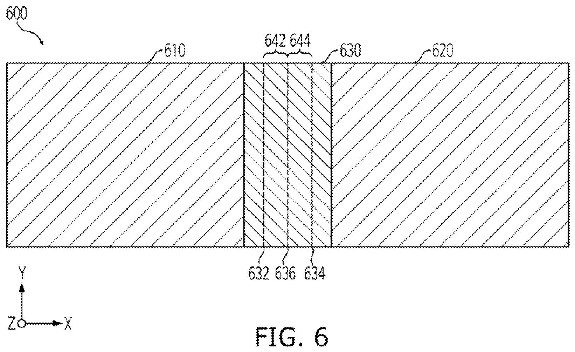

FIG. 6 illustrates an example of an electrode plate 600 according to an embodiment of the present disclosure. In an embodiment, the electrode plate (the positive electrode plate or the negative electrode plate) 600 may include a first mixture portion 610 and a second mixture portion 620 on which an active material is applied to a substrate, and an uncoated portion 630 on which an active material is not applied to the substrate. The uncoated portion 630 may be arranged between the first mixture portion 610 and the second mixture portion 620.

In an embodiment, the uncoated portion 630 may include a first bent portion 642 and a second bent portion 644. Specifically, the uncoated portion 630 may include a first bending line 632 formed at a position closer to the first mixture portion 610 than the second mixture portion 620. In addition, the uncoated portion 630 may include a second bending line 634 formed at a position closer to the second mixture portion 620 than the first mixture portion 610. Additionally, the uncoated portion 630 may include a third bending line 636 formed between the first bending line 632 and the second bending line 634. The first bending line 632, the second bending line 634, and the third bending line 636 may be parallel to each other. In this case, the first bending portion 642 may be formed based on the first bending line 632 and the third bending line 636, and the second bending portion 644 may be formed based on the second bending line 634 and the third bending line 636.

In an embodiment, the length of each of the first bending portion 642 and the second bending portion 644 may correspond to the (vertical) length of the substrate (as oriented in FIG. 6). The length may represent the vertical length perpendicular to the width. For example, in a case where the electrode plate 600 is a positive electrode plate, the length of each of the first bent portion 642 and the second bent portion 644 may be equal to the length of the positive electrode substrate. As another example, in a case where the electrode plate 600 is a negative electrode plate, the length of each of the first bent portion 642 and the second bent portion 644 may be equal to the length of the negative electrode substrate.

In an embodiment, the distance between the first bending line 632 and the third bending line 636 may be equal to the distance between the second bending line 634 and the third bending line 636. That is, the width of the first bent portion 642 may be equal to the width of the second bent portion 644. The distance between the first bending line 632 and the third bending line 636 (i.e., the width of the first bent portion 642) may be determined based on at least one of the thickness of the positive electrode plate or the thickness of the negative electrode plate. The thickness of the positive electrode plate and the thickness of the negative electrode plate may be thicknesses that take into account the thickness expansion rate of the positive electrode plate and the thickness expansion rate of the negative electrode plate. Similarly, the distance between the second bending line 634 and the third bending line 636 (i.e., the width of the second bent portion 644) may be determined based on at least one of the thickness of the positive electrode plate or the thickness of the negative electrode plate.

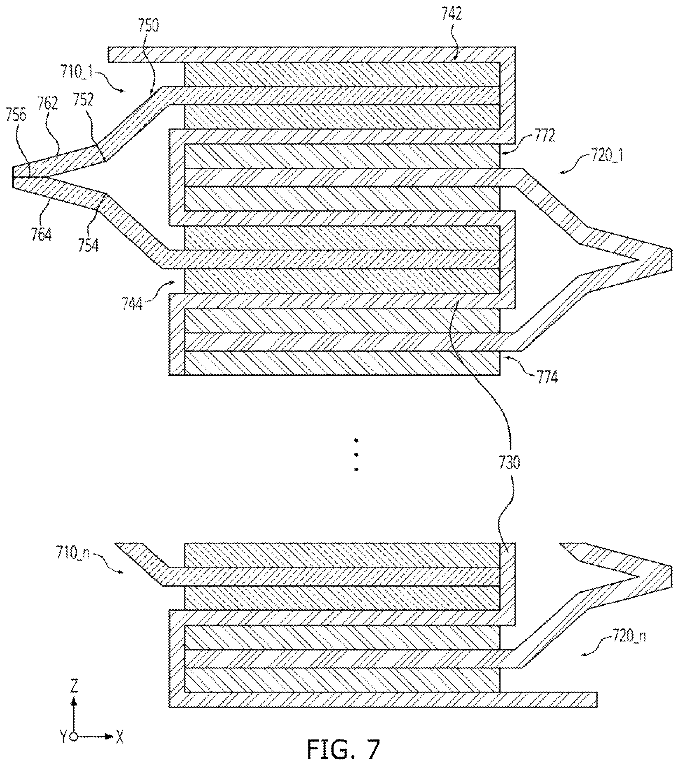

FIG. 7 illustrates an example of an electrode assembly according to an embodiment of the present disclosure. In an embodiment, the electrode assembly may include a plurality of positive electrode plates 710_1 to 710_n, a plurality of negative electrode plates 720_1 to 720_n, and a separator 730. Each of the positive electrode plates 710_1 to 710_n and the negative electrode plates 720_1 to 720_n may be included in the electrode plate 600 described above with reference to FIG. 6.

In an embodiment, as described above with reference to FIG. 6, the electrode plate (the positive electrode plate or the negative electrode plate) may include a first mixture portion and a second mixture portion on which an active material is applied to a substrate, and an uncoated portion on which an active material is not applied to the substrate. The uncoated portion may be arranged between the first mixture portion and the second mixture portion. Additionally, the uncoated portion may include a first bent portion and a second bent portion. Additionally, the first bent portion and the second bent portion may be exposed to the outside of the positive electrode mixture portion.

For example, an uncoated portion 750 of the first positive electrode plate 710_1 may include a first bending line 752 formed at a position closer to a first positive electrode mixture portion 742 than a second positive electrode mixture portion 744, a second bending line 754 formed at a position closer to the second positive electrode mixture portion 744 than the first positive electrode mixture portion 742, and a third bending line 756 formed between the first bending line 752 and the second bending line 754. The first bending line 752, the second bending line 754, and the third bending line 756 may be parallel to each other (e.g., in the orientation of FIG. 6). In addition, the uncoated portion 750 of the first positive electrode plate 710_1 may further include a first bent portion 762 formed based on the first bending line 752 and the third bending line 756, and a second bent portion 764 formed based on the second bending line 754 and the third bending line 756. Each of the positive electrode plates (e.g., 710_2 to 710_n) other than the first positive electrode plate 710_1 and the negative electrode plates 720_1 to 720_n may also be similar to the first positive electrode plate 710_1.

In an embodiment, the width of the uncoated portion may be determined based on at least a portion of the thickness of the positive electrode plate, the thickness of the negative electrode plate, the thickness of the separator, the width of the first bent portion, or the width of the second bent portion. The thickness of the positive electrode plate and the thickness of the negative electrode plate may be thicknesses that take into account the thickness expansion rate of the positive electrode plate and the thickness expansion rate of the negative electrode plate. For example, the uncoated portion 750 of the first positive electrode plate 710_1 may be determined based on at least one of the thickness of the first positive electrode plate 710_1, the thickness of the first negative electrode plate 720_1, the thickness of the separator 730, the width of the first bent portion 762, or the width of the second bent portion 764.

In an embodiment, the positive electrode plates 710_1 to 710_n and the negative electrode plates 720_1 to 720_n may be arranged to cross each other. Specifically, the first negative electrode mixture portion or the second negative electrode mixture portion of the negative electrode plate may be arranged between the first positive electrode mixture portion and the second positive electrode mixture portion of the positive electrode plate, and the first positive electrode mixture portion or the second positive electrode mixture portion may be arranged between the first negative electrode mixture portion and the second negative electrode mixture portion. For example, a first negative electrode mixture portion 772 of the first negative electrode plate 720_1 may be arranged between the first positive electrode mixture portion 742 and the second positive electrode mixture portion 744 of the first positive electrode plate 710_1. In addition, the second positive electrode mixture portion 744 of the first positive electrode plate 710_1 may be arranged between the first negative electrode mixture portion 772 and the second negative electrode mixture portion 774 of the first negative electrode plate 720_1.

In an embodiment, the separator 730 may be arranged between each of the positive electrode plates 710_1 to 710_n and each of the negative electrode plates 720_1 to 720_n. In addition, the separator 730 may cover the upper surface of any one electrode plate arranged at the uppermost end among the positive electrode plates 710_1 to 710_n or the negative electrode plates 720_1 to 720_n and may cover the lower surface of any one electrode plate arranged at the lowermost end among the positive electrode plates 710_1 to 710_n or the negative electrode plates 720_1 to 720_n. The polarity of the electrode plate arranged at the uppermost end may be different from the polarity of the electrode plate arranged at the lowermost end. For example, in a case where the positive electrode plate is arranged at the uppermost end of the electrode assembly, the negative electrode plate may be arranged at the lowermost end of the electrode assembly. In contrast, in a case where the negative electrode plate is arranged at the uppermost end of the electrode assembly, the positive electrode plate may be arranged at the lowermost end of the electrode assembly. Referring to FIG. 7, the separator 730 may cover the upper surface of the first positive electrode plate 710_1 stacked at the uppermost end of the electrode assembly and may cover the lower surface of the n-th negative electrode plate 720_n stacked at the lowermost end of the electrode assembly.

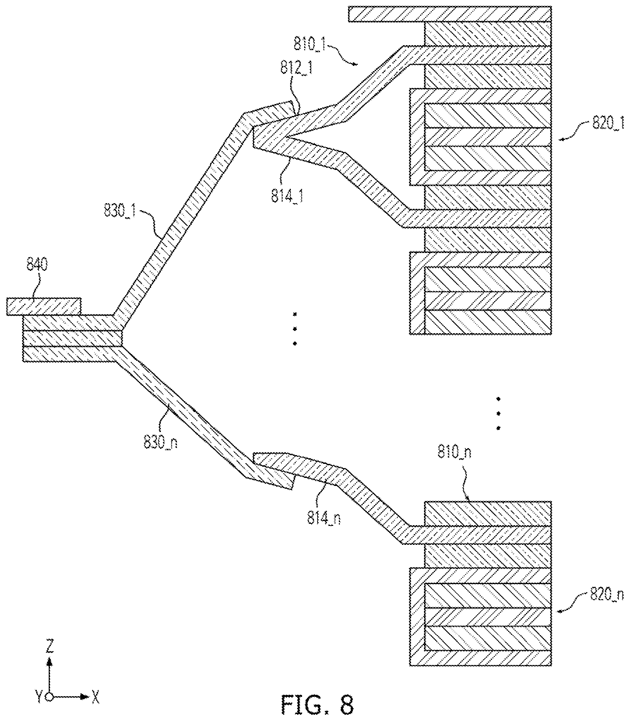

FIG. 8 illustrates an example in which a plurality of positive electrode plates 810_1 to 810_n of an electrode assembly according to an embodiment of the present disclosure are connected to a first lead tab 840. In an embodiment, the electrode assembly may include a plurality of first connecting members 830_1 to 830_n that respectively connect the positive electrode plates 810_1 to 810_n to the first lead tab 840. Specifically, one end of each of the first connecting members 830_1 to 830_n may be connected to one of the first bent portions 812_1 to 812_n or the second bent portions 814_1 to 814_n of the positive electrode plates 810_1 to 810_n. Additionally, the other end of each of the first connecting members 830_1 to 830_n may be connected to the first lead tab 840. In this case, the other end of each of the first connecting members 830_1 to 830_n may be connected to the first lead tab 840 by ultrasonic welding or the like, but various types of connecting may be used.

In an embodiment, one end of each of the first connecting members 830_1 to 830_n may be connected to at least a portion of the first bent portions 812_1 to 812_n or at least a portion of the second bent portions 814_1 to 814_n. Specifically, one end of each of the first connecting members 830_1 to 830_n may be connected to the first bent portion of the electrode plate located above the first lead tab 840 (in the orientation shown) and the second bent portion of the electrode plate located below the first lead tab 840 (in the orientation shown).

In FIG. 8, for convenience of description, only the first connecting members 830_1 to 830_n that respectively connect the positive electrode plates 810_1 to 810_n to the first lead tab 840 are illustrated, but there could be more. For example, the electrode assembly may include a plurality of second connecting members (not shown) that respectively connect a plurality of negative electrode plates 820_1 to 820_n to a second lead tab (not shown). Similar to the first connecting members 810, the second connecting members may connect one of the bent portion or the second bent portion of each of the negative electrode plates 820_1 to 820_n to the second lead tab.

With this structure, by connecting the first bent portion or the second bent portion of each of the electrode plates and the lead tab through the connecting member, the tolerance of the assembly process with respect to the distance from the lead tab may be reduced. Accordingly and advantageously, the quality of the secondary battery may be improved.

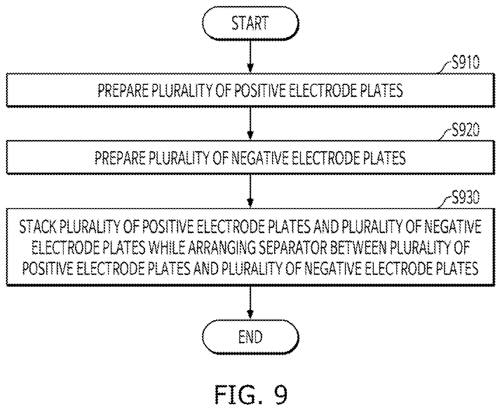

FIG. 9 is a flowchart showing an example of a method 900 for manufacturing an electrode assembly according to an embodiment of the present disclosure. In an embodiment, the method 900 for manufacturing an electrode assembly may be initiated by preparing a plurality of positive electrode plates including a positive electrode mixture portion on which a positive electrode active material is applied to a positive electrode substrate and a first uncoated portion on which a positive electrode active material is not applied to the positive electrode substrate (S910). The positive electrode mixture portion may include a first positive electrode mixture portion and a second positive electrode mixture portion. Additionally, the first uncoated portion may be arranged between the first positive electrode mixture portion and the second positive electrode mixture portion.

Thereafter, a plurality of negative electrode plates including a negative electrode mixture portion on which a negative active material is applied to a negative electrode substrate and a second uncoated portion on which a negative active material is not applied to the negative electrode substrate may be prepared (S920). The negative electrode mixture portion may include a first negative electrode mixture portion and a second negative electrode mixture portion. Additionally, the second uncoated portion may be arranged between the first negative electrode mixture portion and the second negative electrode mixture portion.

Thereafter, the positive electrode plates and the negative electrode plates may be stacked while arranging a separator between the positive electrode plates and the negative electrode plates (S930). Specifically, the first negative electrode mixture portion or the second negative electrode mixture portion may be arranged between the first positive electrode mixture portion and the second positive electrode mixture portion. Additionally, the first positive electrode mixture portion or the second positive electrode mixture portion may be arranged between the first negative electrode mixture portion and the second negative electrode mixture portion. In this case, the separator may cover the upper surface of any one electrode plate arranged at the uppermost end among the positive electrode plates or the negative electrode plates and may cover the lower surface of any one electrode plate arranged at the lowermost end among the positive electrode plates or the negative electrode plates. In addition, the polarity of the electrode plate arranged at the uppermost end may be different from the polarity of the electrode plate arranged at the lowermost end.

In an embodiment, the length of the first uncoated portion may correspond to the length of the positive electrode substrate. In addition, the length of the second uncoated portion may correspond to the length of the negative electrode substrate. Additionally, the width of the first uncoated portion may be greater than the width of the second uncoated portion.

In an embodiment, the first uncoated portion may include a first bending line formed at a position closer to the first positive electrode mixture portion than the second positive electrode mixture portion and a second bending line formed at a position closer to the second positive electrode mixture portion than the first positive electrode mixture portion. The second bending line may be parallel to the first bending line. Additionally, the bent portion of the first uncoated portion may be formed based on the first bending line and the second bending line. In this case, the width of the first uncoated portion may be determined based on at least a portion of the thickness of the positive electrode plate, the thickness of the negative electrode plate, the thickness of the separator, or the width of the bent portion.

In an embodiment, a first connecting member may be connected to each of the positive electrode plates. Additionally, a second connecting member may be connected to each of the negative electrode plates. One end of the first connecting member may be connected to the bent portion of each of the positive electrode plates, and the other end of the first connecting member may be connected to a lead tab.

In an embodiment, the first uncoated portion may include a first bending line formed at a position closer to the first positive electrode mixture portion than the second positive electrode mixture portion, a second bending line formed at a position closer to the second positive electrode mixture portion than the first positive electrode mixture portion, and a third bending line formed between the first bending line and the second bending line. The third bending line may be parallel to each of the first bending line and the second bending line. Additionally, the first bent portion of the first uncoated portion may include a first bent portion formed based on the first bending line and the third bending line and a second bent portion formed based on the second bending line and the third bending line. In this case, the width of the first uncoated portion may be determined based on at least a portion of the thickness of the positive electrode plate, the thickness of the negative electrode plate, the thickness of the separator, the width of the first bent portion, or the width of the second bent portion. Additionally, one end of the first connecting member may be connected to at least a portion of the first bent portion or at least a portion of the second bent portion, and the other end of the first connecting member may be connected to the lead tab.

In an embodiment, the distance between the first bending line and the third bending line may be determined based on at least one of the thickness of the positive electrode plate or the thickness of the negative electrode plate. Additionally, the first bent portion and the second bent portion may be exposed to the outside of the positive electrode mixture portion.

According to some embodiments of the present disclosure, the electrode assembly may be manufactured without forming electrode tabs through notching in the electrode plate.

Electrode tabs may be formed by notching the positive electrode and the negative electrode of the electrode assembly. However, during this process, burrs or active material detachment may occur due to poor notching. In this case, the performance and safety of the secondary battery including the electrode assembly may be deteriorated.

According to some embodiments of the present disclosure, the occurrence of burrs and active material detachment due to notching may be prevented.

According to some embodiments of the present disclosure, the quality and safety of the electrode assembly and the secondary battery including the same may be improved.

According to some embodiments of the present disclosure, the energy density of the electrode assembly may be improved by connecting the bent portions of the electrode plates using the connecting member.

According to some embodiments of the present disclosure, by connecting the first bent portion or the second bent portion of each of the electrode plates and the lead tab through the connecting member, the tolerance of the assembly process with respect to the distance from the lead tab may be reduced.

Although the present disclosure has been described above with respect to embodiments thereof, the present disclosure is not limited thereto. Various modifications and variations can be made thereto by those skilled in the art within the scope of the present disclosure and the equivalent scope of the appended claims.

### DESCRIPTION OF SOME REFERENCE SYMBOLS

110: positive electrode plate
112: first positive electrode mixture portion
114: second positive electrode mixture portion
116: first uncoated portion
120: negative electrode plate
122: first negative electrode mixture portion
124: second negative electrode mixture portion
126: second uncoated portion

## Claims

1. An electrode assembly, comprising:
a plurality of positive electrode plates (110, 410, 510, 710, 810), each of the plurality of positive electrode plates (110, 410, 510, 710, 810) comprising a positive electrode mixture portion on which a positive electrode active material is applied to a positive electrode substrate and a first uncoated portion (116, 450, 750) on which a positive electrode active material is not applied to the positive electrode substrate;
a plurality of negative electrode plates (120, 420, 520, 720, 820), each of the plurality of negative electrode plates (120, 420, 520, 720, 820) comprising a negative electrode mixture portion on which a negative electrode active material is applied to a negative electrode substrate and a second uncoated portion (126) on which a negative electrode active material is not applied to the negative electrode substrate; and
a separator (430, 730) between each of the positive electrode plates (110, 410, 510, 710, 810) and each of the negative electrode plates (120, 420, 520, 720, 820), wherein:
the positive electrode mixture portion comprises a first positive electrode mixture portion (112, 442, 742) and a second positive electrode mixture portion (114, 444, 744),
the negative electrode mixture portion comprises a first negative electrode mixture portion (122, 470, 772) and a second negative electrode mixture portion (124, 474, 774),
the first uncoated portion (116, 450, 750) is between the first positive electrode mixture portion (112, 442, 742) and the second positive electrode mixture portion (114, 444, 744),
the second uncoated portion (126) is between the first negative electrode mixture portion (122, 470, 772) and the second negative electrode mixture portion (124, 474, 774),
a length of a bent portion (456, 512) of the first uncoated portion (116, 450, 750) corresponds to a length of the positive electrode substrate, and
a length of a bent portion of the second uncoated portion (126) corresponds to a length of the negative electrode substrate.

2. The electrode assembly as claimed in claim 1, further comprising a first connecting member (530, 830) connecting the plurality of positive electrode plates (110, 410, 510, 710, 810) to each other and a second connecting member connecting the plurality of negative electrode plates (120, 420, 520, 720, 820) to each other.

3. The electrode assembly as claimed in claim 2, wherein the first uncoated portion (116, 450, 750) comprises:
a first bending line (332, 452, 632, 752) at a position closer to the first positive electrode mixture portion (112, 442, 742) than the second positive electrode mixture portion (114, 444, 744); and
a second bending line (334, 454, 634, 754) at a position closer to the second positive electrode mixture portion (114, 444, 744) than the first positive electrode mixture portion (112, 442, 742), the second bending line (334, 454, 634, 754) being parallel to the first bending line (452),
wherein the bent portion (456, 512) of the first uncoated portion (116, 450, 750) is based on the first bending line (332, 452, 632, 752) and the second bending line (334, 454, 634, 754).

4. The electrode assembly as claimed in claim 3, wherein one end of the first connecting member (530, 830) is connected to the bent portion (456, 412) of each of the plurality of positive electrode plates (110, 410, 510, 710, 810) and another end opposite the one end of the first connecting member (530, 830) is connected to a lead tab (540).

5. The electrode assembly as claimed in claim 3 or 4, wherein a width (w1) of the first uncoated portion (116, 450, 750) is determined based on at least a portion of a thickness of each of the plurality of positive electrode plates (110, 410, 510, 710, 810), a thickness of each of the plurality of negative electrode plates (120, 420, 520, 720, 820), a thickness of the separator (430, 730), or a width of the bent portion.

6. The electrode assembly as claimed in claims 2 to 5, wherein the first uncoated portion (116, 450, 750) comprises:
a first bending line (332, 452, 632, 752) at a position closer to the first positive electrode mixture portion (112, 442, 742) than the second positive electrode mixture portion (114, 444, 744);
a second bending line (334, 454, 634, 754) at a position closer to the second positive electrode mixture portion (114, 444, 744) than the first positive electrode mixture portion (112, 442, 742); and
a third bending line (636, 756) between the first bending line (332, 452, 632, 752) and the second bending line (334, 454, 634, 754) and parallel to each of the first bending line (332, 452, 632, 752) and the second bending line (334, 454, 634, 754),
wherein the bent portion (456, 512) of the first uncoated portion (116, 450, 750) comprises:
a first bending portion (762, 812) based on the first bending line (332, 452, 632, 752) and the third bending line (636, 756); and
a second bending portion (764, 814) based on the second bending line (334, 454, 634, 754) and the third bending line (636, 756).

7. The electrode assembly as claimed in claim 6, wherein one end of the first connecting member (530, 830) is connected to at least a portion of the first bending portion (762, 812) or at least a portion of the second bending portion (764, 814), and another end of the first connecting member (530, 830) opposite the one end is connected to a lead tab (840).

8. The electrode assembly as claimed in claim 6 or 7, wherein a width (w1) of the first uncoated portion (116, 450, 750) is determined based on at least a portion of a thickness of each of the plurality of positive electrode plates (110, 410, 510, 710, 810), a thickness of each of the plurality of negative electrode plates (120, 420, 520, 720, 820), a thickness of the separator (430, 730), a width of the first bending portion (762, 812), or a width of the second bending portion (764, 814).

9. The electrode assembly as claimed in claims 6 to 8, wherein a distance between the first bending line (332, 452, 632, 752) and the third bending line (636, 756) is determined based on at least one of a thickness of each of the plurality of positive electrode plates (110, 410, 510, 710, 810) or a thickness of each of the plurality of negative electrode plates (120, 420, 520, 720, 820).

10. The electrode assembly as claimed in claims 6 to 9, wherein the first bent portion and the second bent portion are exposed to an outside of the positive electrode mixture portion.

11. The electrode assembly as claimed in claims 1 to 10, wherein a width (w1) of the first uncoated portion (116, 450, 750) is greater than a width (w2) of the second uncoated portion (126).

12. The electrode assembly as claimed in claims 1 to 11, wherein:
one of the first negative electrode mixture portion (122, 470, 772) and the second negative electrode mixture portion (124, 474, 774) is between the first positive electrode mixture portion (112, 442, 742) and the second positive electrode mixture portion (114, 444, 744), and
one of the first positive electrode mixture portion (112, 442, 742) and the second positive electrode mixture portion (114, 444, 744) is between the first negative electrode mixture portion (122, 470, 772) and the second negative electrode mixture portion (124, 474, 774).

13. The electrode assembly as claimed in claims 1 to 12, wherein:
the separator (430, 730) covers an upper surface of any one electrode plate arranged at an uppermost end among the plurality of positive electrode plates (110, 410, 510, 710, 810) or the plurality of negative electrode plates (120, 420, 520, 720, 820), and
the separator (430, 730) covers a lower surface of any one electrode plate arranged at a lowermost end among the plurality of positive electrode plates (110, 410, 510, 710, 810) or the plurality of negative electrode plates (120, 420, 520, 720, 820).

14. The electrode assembly as claimed in claim 13, wherein the any one electrode plate arranged at the uppermost end is different from the any one electrode plate arranged at the lowermost end.

15. A method for manufacturing an electrode assembly, the method comprising:
preparing (S910) a plurality of positive electrode plates (110, 410, 510, 710, 810), each of the plurality of positive electrode plates (110, 410, 510, 710, 810) comprising a positive electrode mixture portion on which a positive electrode active material is applied to a positive electrode substrate and a first uncoated portion (116, 450, 750) on which a positive electrode active material is not applied to the positive electrode substrate;
preparing (S920) a plurality of negative electrode plates (120, 420, 520, 720, 820), each of the plurality of negative electrode plates (120, 420, 520, 720, 820) comprising a negative electrode mixture portion on which a negative electrode active material is applied to a negative electrode substrate and a second uncoated portion (126) on which a negative electrode active material is not applied to the negative electrode substrate; and
stacking (S930) the plurality of positive electrode plates (110, 410, 510, 710, 810) and the plurality of negative electrode plates (120, 420, 520, 720, 820) while arranging a separator (430, 730) between the plurality of positive electrode plates (110, 410, 510, 710, 810) and the plurality of negative electrode plates (120, 420, 520, 720, 820), wherein:
the positive electrode mixture portion comprises a first positive electrode mixture portion (112, 442, 742) and a second positive electrode mixture portion (114, 444, 744),
the negative electrode mixture portion comprises a first negative electrode mixture portion (122, 470, 772) and a second negative electrode mixture portion (124, 474, 774),
the first uncoated portion (116, 450, 750) is between the first positive electrode mixture portion (112, 442, 742) and the second positive electrode mixture portion (114, 444, 744),
the second uncoated portion (126) is between the first negative electrode mixture portion (122, 470, 772) and the second negative electrode mixture portion (124, 474, 774),
a length of a bent portion (456, 512) of the first uncoated portion (116, 450, 750) corresponds to a length of the positive electrode substrate, and
a length of a bent portion of the second uncoated portion (126) corresponds to a length of the negative electrode substrate.
